# EUROPEAN PATENT APPLICATION

(11) **EP 2 451 057 A1**
(43) Date of publication of application: **09.05.2012**
(21) Application number: 10461532.3
(22) Date of filing: 09.11.2010
(51) Int. Cl.: H02K 9/00

(54) **Rotor of an electric generator**

(71) Applicant: Alstom Technology Ltd, 5400 Baden (CH)
(72) Inventor: Seibert, Philipp, CH-5300, Turgi (CH); Jedlinski, Marek, PL-53-650, Wroclaw (PL); Wiebe, Markus, CH-4054, Basel (CH); Camppardon, Jean-Marc, F-90400, Meroux (FR); Verrier, Michel, F-90850, Essert (FR)

(57) **Abstract**

The rotor (1) of an electric generator comprises an active core (4) and a shaft (5) having an axial hole (19) housing a lead (18) connectable to an exciter (12). The shaft (5) comprises radial holes (21) each housing a radial stalk (20) connecting the lead (18) to an electric circuit of the active core (4). The axial hole (19) extends up to the active core (4). The active core (4) has cooling holes (35) connected to the axial hole (19) and opening to the inside of the generator's casing (8).

## Description

### TECHNICAL FIELD

The present invention relates to a rotor of an electric generator.

### BACKGROUND OF THE INVENTION

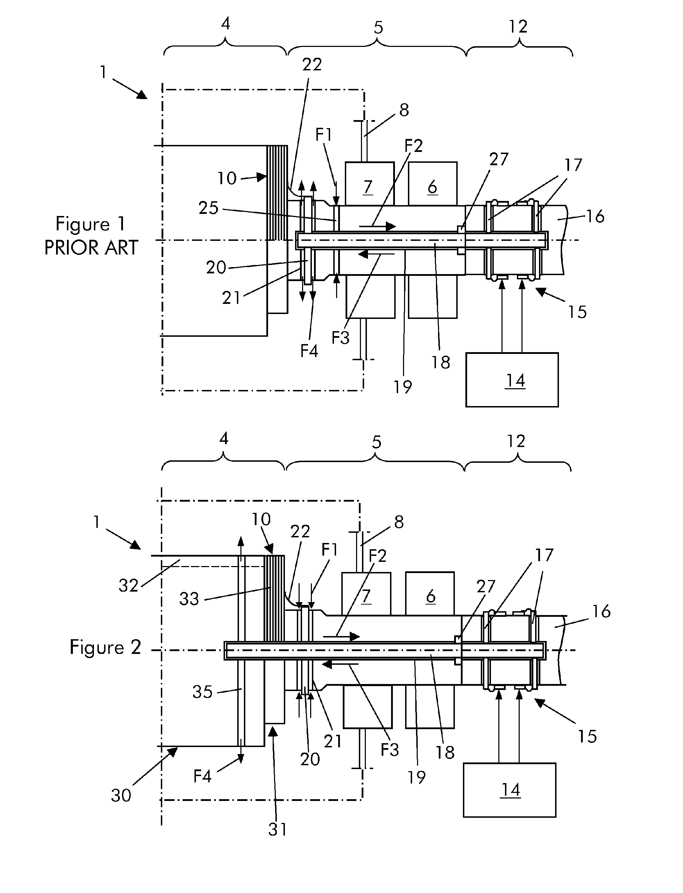

With reference to figure 1 that shows an example of a traditional hydrogen cooled electric generator, electric generators are known to comprise an annular stator (not shown) into which a rotor 1 is rotatably housed.

The rotor 1 comprises an active core 4 and a rotor shaft 5 provided with support bearings 6, for supporting the rotor 1, and seal rings 7, for sealing the inner of the generator's casing 8 against the outer atmosphere.

The rotor 1 is provided with rotor windings 10 (or field windings) connected to an exciter 12.

Figure 1 shows one possible example of an exciter 12 that comprises a DC supplier machine 14 connected to slip rings 15 provided on an excited shaft 16 facing the rotor shaft 5. The slip rings 15 are connected, via radial rods 17, to an end of an axial lead 18 housed in an axial hole 19 of the rotor shaft 5 and excited shaft 16.

The opposite end of the lead 18 is connected to radial stalks 20 housed (with a gap) in radial holes 21 and connected via plates 22 to the rotor windings 10.

The lead 18 is made of two conductive elements insulated from one another, together defining a cylindrical shape and each connected to one of the slip rings 15.

During operation the DC electric power generated by the machine 14 is supplied via the radial rods 17, the axial lead 18, the radial stalks 20 and the plates 22 to the rotor windings 10; this causes large heat generation and, thus, the need of cooling in particular the radial stalks 20 and the axial lead 18.

In this respect, traditionally the rotor shaft 5 is provided with further cooling holes 25 in a portion having a smaller diameter than the portion where the holes 21 and radial stalks 20 are provided.

Because of the different radial length of the holes 21 and 25, during operation (when the rotor shaft 5 rotates) centrifugal forces generate, which make the gas (usually hydrogen) contained in the casing 8 enter into the holes 25 and circulate in the hole 19, cooling the lead 18 and stalks 20.

In particular, hydrogen enters via the holes 25 (arrow F1), circulates towards the seal 27 placed between the rotor shaft 5 and exciter shaft 16 (arrow F2) and then circulates back (arrow F3) to then move out via the holes 21 (arrows F4). The lead 18 and adapted obstructions define a circuit in the hole 19 that allows this circulation.

Due to this arrangement, in some cases problems may occur.

In fact, since the difference between the radial length of the holes 25 (entrance) and 21 (exit) is quite small, the hydrogen amount that enters the holes 25 to cool the lead 18 and stalks 20 is small and the cooling efficiency is therefore low.

In addition, stress created by this arrangement (in particular due to the holes 25 drilled in a portion where the rotor shaft diameter is small) is usually high.

### SUMMARY OF THE INVENTION

The technical aim of the present invention is therefore to provide a rotor by which the said problems of the known art are eliminated.

Within the scope of this technical aim, an aspect of the invention is to provide a rotor in which the cooling hydrogen amount that cools the lead and the radial stalks is increased and, in particular, the cooling efficiency is increased.

Another aspect of the invention is to provide a rotor in which stress is reduced.

The technical aim, together with these and further aspects, are attained according to the invention by providing a rotor in accordance with the accompanying claims.

### BRIEF DESCRIPTION OF THE DRAWINGS

Further characteristics and advantages of the invention will be more apparent from the description of a preferred but non-exclusive embodiment of the rotor, illustrated by way of non-limiting example in the accompanying drawings, in which:
Figure 1 is a schematic view of a portion of a rotor according to the prior art; and
Figures 2-4 are three rotor portions in different embodiments of the invention.

### DETAILED DESCRIPTION OF THE INVENTION

With reference to figures 2-4, these show a rotor of an electric generator; in these figures (and also in figure 1 referring to a traditional rotor) like reference numerals designate like elements throughout.

The rotor 1 comprises an active core 4 and a shaft 5 having an axial hole 19 housing a lead 18 connectable to an exciter 12 (the attached figures show the lead 18 actually connected to the exciter 12).

In addition the shaft 5 is connected to support bearings 6 and seal rings 7, that seal the inner of the casing 8 containing hydrogen.

The active part 4 has a pole zone 30 and an end winding zone 31.

The pole zone 30 is provided with slots housing the straight parts 32 (also called slot parts) of the windings 10.

The end winding zone 31 supports the curved end windings 33 of the windings 10 (they are only shown at the upper part of the rotor), connecting together straight parts 32 housed in different slots.

The shaft 5 comprises one or typically more than one radial hole 21 each housing a radial stalk 20. The stalks 20 are housed in the holes 21 with a gap, such that a passage between each hole 21 and stalk 20 is defined; through this passage hydrogen (housed in the casing 8) can pass through.

The radial stalks 20 are connected to the lead 18 and, via radial rods 17 also to slip rings 15 of the exciter 12.

Naturally also different configurations for the exciter 12 are possible and the one described is only one of the numerous possibilities; for example the exciter may also have no slip rings.

In addition, the radial stalks 20 are connected, via plates 22, to the end windings 33, to connect the lead 18 to the electric circuit of the active core 4.

Advantageously, the axial hole 19 of the rotor shaft 5 extends up to the active core 4; in addition, the active core 4 has one or more than one cooling holes 35 that preferably extend radially and are connected to the axial hole 19 and open to the inside of the generator's casing 8.

Thus, no holes equivalent to the holes 25 of the traditional rotors are provided, placed on a shaft zone with a smaller diameter than the portion where the holes 21 and radial stalks 20 are located.

In different embodiments the outlets of the holes 35 may be radial or axial.

In addition, the holes 35 may be provided in the rotor end winding zone 31 or in the rotor pole zone 30 of the active core 4; correspondingly, the axial hole 19 extends up to the rotor end winding zone 31 or rotor pole zone 30 of the active core 4.

Figures 2-4 shows three different embodiments of the rotor.

Figure 2 shows an embodiment of rotor 1 with holes 35 that are provided at the pole zone 30 of the active core 4; the hole 19 extends up to the pole zone 30; in addition, the outlets of the holes 35 are radial.

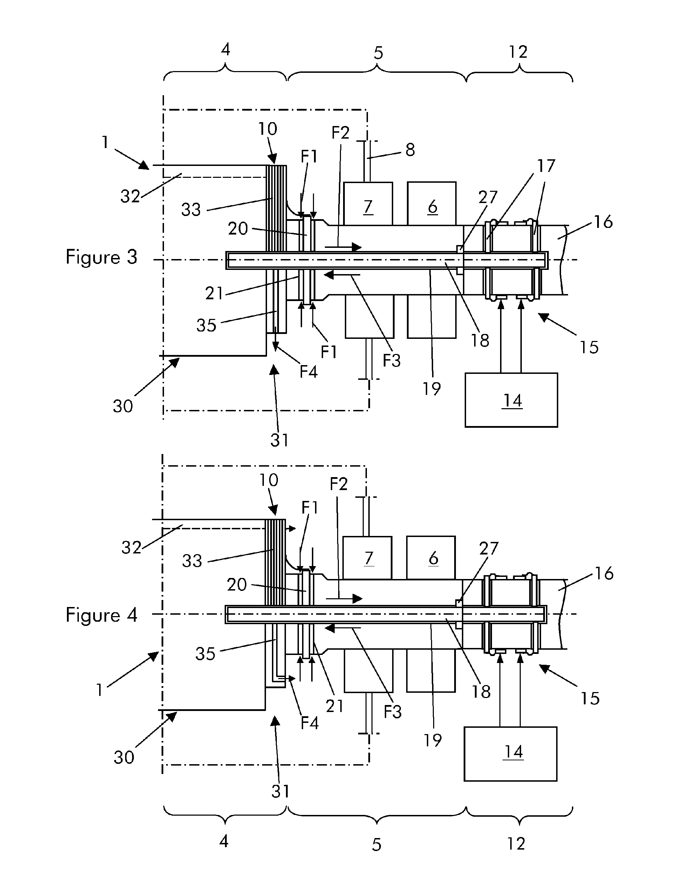

Figure 3 shows an embodiment of rotor 1 with holes 35 that are provided at the end winding zone 31 of the active core 4; the hole 19 extends up to the end winding zone 31; in addition, the outlets of the holes 35 are radial.

Figure 4 shows an embodiment of rotor 1 with holes 35 that are provided at the end winding zone 31 of the active core 4; the hole 19 extends up to the end winding zone 31. The outlets of the holes 35 are axial.

The operation of the rotor is apparent from that described and illustrated and is substantially the following.

When rotating, differential centrifugal forces cause hydrogen to enter the hole 21 (arrow F1) and circulate towards the seal 27 (arrow F2) and back towards the active core 4 (arrow F3) to move out via the holes 35 (arrow F4).

Since the holes 35 are provided at the active core 4 that has a much larger diameter than the shaft 5, differential centrifugal forces causing the hydrogen to circulate in the holes 21, 19 and 35 are large and the amount of hydrogen circulating through is consequently large; this allows an larger cooling and higher cooling efficiency than in traditional rotors.

In addition, since the holes 35 are provided in the active core 4 that has a larger diameter than the shaft 5, stress caused by the holes 35 is low.

Naturally the features described may be independently provided from one another.

In practice the materials used and the dimensions can be chosen at will according to requirements and to the state of the art.

### REFERENCE NUMBERS

1 rotor
4 active core
5 rotor shaft
6 support bearings
7 seal rings
8 casing
10 rotor windings
12 exciter
14 DC supplier machine
15 slip rings
16 exciter shaft
17 rods
18 lead
19 hole
20 stalks
21 holes housing 20
22 plates
25 cooling holes
27 seal
30 pole zone of 4
31 end winding zone of 4
32 straight part of 10
33 end windings of 10
35 holes
F1, F2, F3, F4 cooling fluid (hydrogen)

## Claims

1. Rotor (1) of an electric generator comprising an active core (4) and a shaft (5) having an axial hole (19) housing a lead (18) connectable to an exciter (12), wherein said shaft (5) further comprises at least a radial hole (21) housing a radial stalk (20) connecting the lead (18) to an electric circuit of the active core (4), **characterised in that** said axial hole (19) extends up to the active core (4), and **in that** the active core (4) has at least a cooling hole (35) connected to the axial hole (19) and opening to the inside of the generator's casing (8).

2. Rotor (1) as claimed in claim 1, **characterised in that** said at least a cooling hole (35) has a radial outlet.

3. Rotor (1) as claimed in claim 1, **characterised in that** said at least a cooling hole (35) has an axial outlet.

4. Rotor (1) as claimed in claim 1, **characterised in that** said at least a cooling hole (35) is provided in the end winding zone (31) of the active core (4).

5. Rotor (1) as claimed in claim 4, **characterised in that** said axial hole (19) extends up to the end winding zone (31) of the active core (4).

6. Rotor (1) as claimed in claim 1, **characterised in that** said at least a cooling hole (35) is provided in the pole zone (30) of the active core (4).

7. Rotor (1) as claimed in claim 6, **characterised in that** said axial hole (19) extends up to the pole zone (30) of the active core (4).

8. Rotor (1) as claimed in claim 1, **characterised in that** said at least a cooling hole (35) extends radially.
